# EUROPEAN PATENT SPECIFICATION

(11) **EP 2 333 871 B1**
(45) Date of publication and mention of the grant of the patent: **21.03.2012**
(21) Application number: 10168526.1
(22) Date of filing: 06.07.2010
(51) Int. Cl.: H01M 2/04, H01M 2/08, H01M 2/12, H01M 2/34, H01M 10/42

(54) **Rechargeable battery**
Wiederaufladbare Batterie
Batterie rechargeable

(30) Priority: 08.12.2009 US 267790 P; 27.05.2010 US 789114
(43) Date of publication of application: 15.06.2011
(73) Proprietor: SB LiMotive Co., Ltd., Yongin-si Gyeonggi-do (KR)
(72) Inventor: Byun, Sang-Won, Gyeonggi-do (KR)
(74) Representative: Gulde Hengelhaupt Ziebig & Schneider

(56) References cited:
- EP-A2- 1 717 886
- JP-A- 5 062 664
- JP-A- 2006 147 180
- KR-A- 20060 020 211
- US-B1- 6 342 826

## Description

### Field of the Invention

The present invention relates to a rechargeable battery. More particularly, the present invention relates to a rechargeable battery that relieves and sustains an internal pressure rise state.

### Description of the Related Art

A rechargeable battery can be repeatedly charged and discharged, unlike a primary battery. A small capacity rechargeable battery is used for a small portable electronic device, such as a mobile phone, a laptop computer, and a camcorder, and a large capacity rechargeable battery is used as a power source for driving a motor, such as for a hybrid vehicle.

A high power rechargeable battery using a high energy density non-aqueous electrolyte has been developed, and such a high power rechargeable battery is formed by coupling a plurality of unit cells in series in order to drive a motor of an appliance, for example an electric vehicle that requires a large amount of electric power.

A unit cell of the rechargeable battery is formed with a cylindrical shape or a square shape. A square rechargeable battery includes an electrode assembly in which a positive electrode and a negative electrode are positioned with a separator disposed there between, a case that houses the electrode assembly, a cap plate that closes and seals the case and that has a terminal hole, and a terminal that is inserted into the terminal hole and that is electrically connected to the electrode assembly to protrude to the outside of the case.

If excessive heat occurs at the inside thereof due to charge and discharge operations, or if internal pressure rises due to decomposition of an electrolyte solution, such a rechargeable battery may explode or ignite. It is difficult for a square rechargeable battery to have a structure for intercepting or discharging a current upon overcharge due to particularity of its terminal structure, compared with a cylindrical battery.

US 6,342826 B1 discloses a battery with a switch member of bimetal material which operates in response to an elevated temperature, and a foil diaphragm that cooperates with a bumper that operates the switch member in response to an elevated pressure. JP 2006 147180 A, JP 5062664 A, and KR 2006 0020211 disclose batteries with a current breaking valves.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a rechargeable battery having advantages of relieving and sustaining an internal pressure rise state.

The present invention has been made in an effort to further provide a rechargeable battery having advantages of short-circuiting a positive electrode and a negative electrode and sustaining such a short circuit state, when internal pressure thereof rises.

Accordingly, a rechargeable battery is provided comprising an electrode assembly having a first electrode, a second electrode, and a separator interposed between the first and the second electrodes, a case for mounting the electrode assembly therein, and a cap assembly. The cap assembly comprises a cap plate for closing an opening of the case, a short circuit tab electrically connected to the first electrode, and a deformable member being in communication with the inside of the battery and having a central portion. The deformable member is placed below the short circuit tab and is adapted to be deformed upon an increase of an internal pressure inside the battery to contact the short circuit tab and to connect the first electrode with the second electrode. The central portion of the deformable member is provided with a greater thickness than the thickness of other parts of the deformable member.

The central portion of the deformable member is preferably adapted to contact the short circuit tab. Additionally or alternatively, the central portion is formed to have a thickness adapted to sustain contact to the short circuit tab after deformation of the deformable member.

The deformable member may comprise a circumferential edge portion and a deformable part formed on the inner side of the circumferential edge portion and protruding in convex form toward the interior of the battery.

The portion of the deformable member is preferably adapted to contact the short circuit tab comprises a protrusion formed to protrude to the inside of the case.

The protrusion of the deformable member is formed at a central region of the deformable member or deformable part of the deformable member.

The deformable member is formed in a structure having a gradually increasing thickness form its peripheral region toward its central region.

The surface of the deformable member facing the interior of the case may be provided with a greater curvature than the surface of the deformable member facing the short circuit tab.

The deformable member may be formed within or covering or corresponding to a location of a short-circuit hole provided in the cap plate and wherein the short-circuit hole is closed by the deformable member.

The deformable member is preferably made out of a single piece and made out of conductive material.

The deformable member may be electrically connected to the second electrode via the cap plate.

In one embodiment, the short circuit tab has a planar shape.

The short circuit tab is preferably disposed above the cap plate and above the deformable member. Additionally or alternatively, the short circuit tab may be provided on one side end connected to the first electrode via a first terminal and on the other side end continues beyond the deformable member.

The cap assembly may further comprise an insulation member such that the short circuit tab is coupled to the cap plate with the insulation member interposed there between to electrically isolate the short circuit tab from the cap plate.

In one embodiment, the insulation member is formed in a structure enclosing a side of the short circuit tab.

According to an exemplary embodiment of the present invention, when internal pressure of a rechargeable battery rises, a deformable member contacts a short circuit tab to short-circuit a negative electrode and a positive electrode and thus a large current is formed between the positive electrode and the negative electrode, whereby an electrode assembly is discharged. Thereby, an electrical connection between the terminal and the electrode assembly is intercepted, and rise of an internal pressure is stopped. In this case, the protruded portion of the deformable member is not melted and sustains a contact state with the circuit tab and thus the terminal and the electrode assembly are not again electrically connected. That is, the electrode assembly no longer performs charge and discharge operations.

Throughout the different embodiments, the deformable plate according to the embodiment is a one-piece member integrally comprising thicker and thinner regions to maintain a short-circuit state after its establishment.

### BRIEF DESCRIPTION OF THE DRAWINGS

FIG. 1 is a perspective view illustrating a rechargeable battery according to a first exemplary embodiment of the present invention.
FIG. 2 is a cross-sectional view illustrating a rechargeable battery taken along line II-II of FIG. 1.
FIG. 3 is an exploded perspective view of the first terminal side in the rechargeable battery of FIG. 1.
FIG. 4 is a cross-sectional view illustrating a separation state of a short circuit tab and a deformable member when the rechargeable battery of FIG. 1 normally operates.
FIG. 5 is a cross-sectional view illustrating a contact state of a short circuit tab and a deformable member when internal pressure of the rechargeable battery of FIG. 1 rises.
FIG. 6 is a cross-sectional view illustrating a separation state and a contact state of a short circuit tab and a deformable member in a rechargeable battery according to a second exemplary embodiment of the present invention.

### DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from the scope of the present invention. Like reference numerals designate like elements throughout the specification and the drawings.

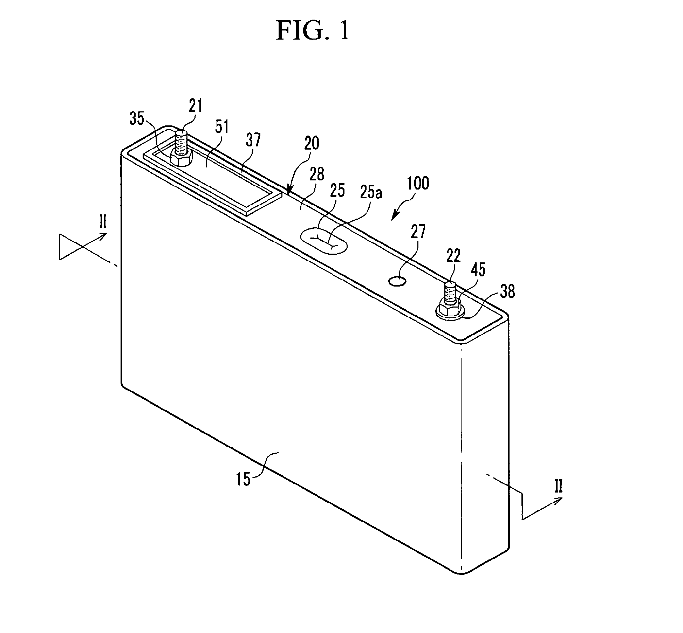

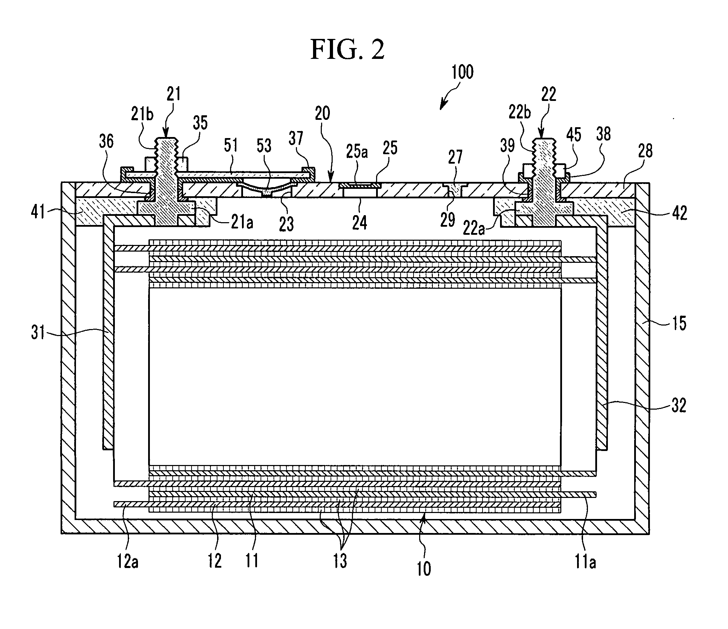

FIG. 1 is a perspective view illustrating a rechargeable battery according to a first exemplary embodiment of the present invention, and FIG. 2 is a cross-sectional view illustrating a rechargeable battery taken along line II-II of FIG. 1. Referring to FIGS. 1 and 2, a rechargeable battery 100 according to a first exemplary embodiment includes an electrode assembly 10, a case 15 that houses the electrode assembly 10, and a cap assembly 20 that is coupled to an opening of the case 15.

The electrode assembly 10 is preferably formed by spiral-winding a positive electrode 11 and a negative electrode 12, and a separator 13, which is an insulator that is interposed there between. Further, the electrode assembly may be formed by stacking a plurality of positive electrodes, separators, and negative electrodes that are formed as sheets (not shown).

The positive electrode 11 and the negative electrode 12 include a coating region of an area in which an active material is coated on a thin plate of a current collector and uncoated regions 11a and 12a of an area in which an active material is not coated. The uncoated region 11 a of the positive electrode 11 is formed at one end of the positive electrode 11 in a length direction of the positive electrode 11, and the uncoated region 12a of the negative electrode 12 is formed at the other end of the negative electrode 12 in a length direction of the negative electrode 12.

The case 15 is formed with an approximately cuboid to form a space that houses the electrode assembly 10 at the inside thereof, and has an opening that is connected to the internal space at one side thereof.

The cap assembly 20 includes a cap plate 28 that covers an opening of the case 15, and a first terminal 21 and a second terminal 22 that are protruded to the outside of the cap plate 28.

The cap plate 28 is formed with a thin plate and is coupled to the opening of the case 15. The cap plate 28 has an electrolyte injection opening 29 and a vent hole 24. A seal stopper 27 is installed at the electrolyte injection opening 29, and a vent plate 25 is installed at the vent hole 24. The vent plate 25 has a notch 25a to be opened when internal pressure of the rechargeable battery 100 arrives at a preset pressure.

The first terminal 21 and the second terminal 22 are installed to penetrate through the cap plate 28 to be electrically connected to the electrode assembly 10 and draw out the electrode assembly 10 to the outside of the case 15. That is, the first terminal 21 is electrically connected to the negative electrode 12 of the electrode assembly 10, and the second terminal 22 is electrically connected to the positive electrode 11.

The first terminal 21 and the second terminal 22 have flanges 21 a and 22a at the inside of the case 15 and screw portions 21 b and 22b at the outside of the case 15. By fastening nuts 35 and 45 to the screw portions 21 b and 22b, the nuts 35 and 45 support the outside of the cap plate 28 from the outside of the case 15, and the flanges 21 a and 22a support the inside of the cap plate 28 at the inside of the case 15.

Gaskets 36 and 39 are installed between the first and second terminals 21 and 22 and the cap plate 28 to seal a space between the first and second terminals 21 and 22 and the cap plate 28, respectively.

The first terminal 21 is electrically connected to the negative electrode 12 by a negative electrode lead tab 31, and the second terminal 22 is electrically connected to the positive electrode 11 by a positive electrode lead tab 32. The negative electrode lead tab 31 and the positive electrode lead tab 32 are formed in the same structure, and thus a description regarding the negative electrode lead tab 31 is also applicable to the positive electrode lead tab 32.

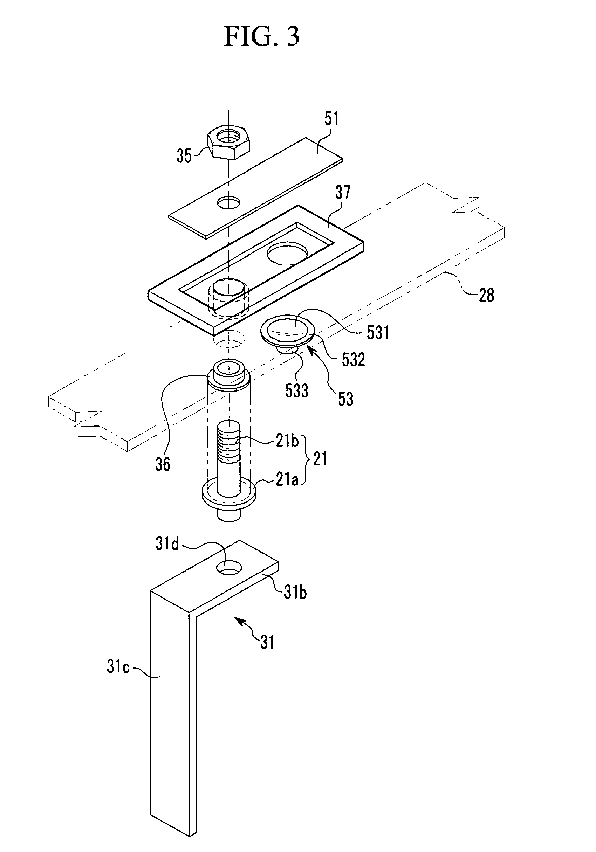

FIG. 3 is an exploded perspective view of the first terminal side in the rechargeable battery of FIG. 1. Referring to FIG. 3, the negative electrode lead tab 31 includes a terminal bonding portion 31 b and an electrode assembly bonding portion 31 c that are orthogonally bent.

The terminal bonding portion 31 b has a terminal hole 31d into which the first terminal 21 is inserted. When the first terminal 21 is inserted into the terminal hole 31d, the flange 21 a contacts at a wide area with the terminal bonding portion 31 b. The electrode assembly bonding portion 31 c is attached by welding to the negative uncoated region 12a. Thereby, the first terminal 21 is electrically connected to the negative electrode 12 of the electrode assembly 10.

Referring again to FIG. 2, lower insulation members 41 and 42 are disposed between the negative and positive electrode lead tabs 31 and 32 and the cap plate 28, respectively, and cover a side surface of the negative and positive electrode lead tabs 31 and 32 to electrically insulate the negative and positive electrode lead tabs 31 and 32 and the cap plate 28. Further, the lower insulation members 41 and 42 are disposed between the cap plate 28 and the flanges 21 a and 22a of the first and second terminals 21 and 22 that are positioned at a surface of the negative and positive electrode lead tabs 31 and 32 to electrically insulate the flanges 21 a and 22a and the cap plate 28.

The rechargeable battery 100 according to an exemplary embodiment has a short circuit tab 51 and a deformable member 53 between the first and second terminals 21 and 22 in order to short-circuit the positive electrode 11 and the negative electrode 12 when internal pressure rises. The deformable member 53 maybe alternatively referred to a short circuit member 53 without limitation since the deformable member 53 establishes a short between the positive and the negative electrodes 11 and 12 upon its deformation. For convenience, in the present exemplary embodiment, the rechargeable battery 100 having the short circuit tab 51 and the deformable member 53 at the first terminal 21 side is exemplified without limitation or restriction. The deformable member 53 according to the invention is a one-piece element improving its durability against melting.

At the first terminal 21 side, the short circuit tab 51 is electrically connected to the first terminal 21 to be provided to the outside of the cap plate 28. An insulation member 37 is disposed between the short circuit tab 51 and the cap plate 28 to electrically insulate the short circuit tab 51 and the cap plate 28. Further, the insulation member 37 is formed in a structure that encloses the side of the short circuit tab 51 to improve insulation safety. The first terminal 21 is inserted into the short circuit tab 51 to be electrically connected thereto. By fastening the nut 35 to the screw portion 21 b of the first terminal 21, the short circuit tab 51 and the insulation member 37 are fixed to the first terminal 21 side.

At the second terminal 22 side, a connection plate 38 electrically connects the second terminal 22 and the cap plate 28. The second terminal 22 is inserted into the connection plate 38. By fastening the nut 45 to the screw portion 22b of the second terminal 22, the connection plate 38 closely contacts the cap plate 28.

When internal pressure of the rechargeable battery 100 rises, the deformable member 53 is deformed to contact the short circuit tab 51 and thus to short-circuit the short circuit tab 51 and the cap plate 28, and is formed to sustain a short-circuited state.

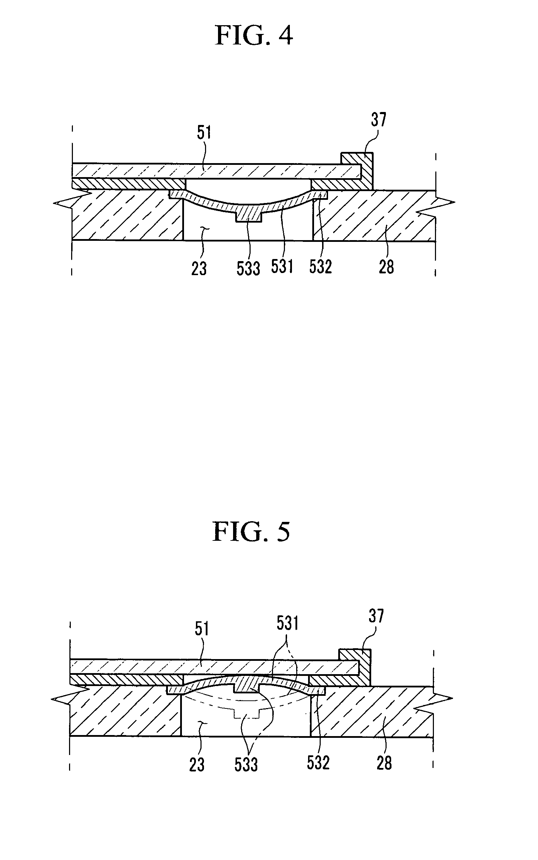

FIG. 4 is a cross-sectional view illustrating a separation state of a short circuit tab and a deformable member when the rechargeable battery of FIG. 1 normally operates. Referring to FIGS. 3 and FIG. 4, in order to install the deformable member 53, the cap plate 28 has a short circuit hole 23.

The deformable member 53 is disposed between the insulation member 37 and the cap plate 28 at the short circuit hole 23. The deformable member 53 has a thin part or film of a curved portion 531 that is formed in an arc shape to be convex inwardly of the case 15, a circumferential edge portion 532 that is formed at the outer side of the curved portion 531 to be electrically connected and fixed to the cap plate 28, and a protruded portion 533 that is protruded to the inside of the case 15 from the center or central region of the curved portion 531. For example, when the curved portion 531 is formed in a thickness of 0.4mm, the protruded portion 533 may be formed in a thickness of 0.5 to 0.6mm. In more general terms, the thickness of the protruded portion 533 is larger than the thickness of its surrounding portions 531, preferably at least 1.2 times larger, even more preferably at least 1.5 times larger. When internal pressure of the case 15 rises, the deformable member 53 is formed so that the curved portion 531 together with the protruded portion 533 may be reversed from pointing to pointing upward (see FIG. 5).

FIG. 5 is a cross-sectional view illustrating a contact state of a short circuit tab and a deformable member when internal pressure of the rechargeable battery of FIG. 1 rises. Referring to FIG. 5, the short circuit tab 51 is extended from the first terminal 21 to cover the short circuit hole 23. Therefore, the shape of the deformable member 53 is reversed by the increase of internal pressure of the case 15 to protrude to the outer surface of the cap plate 28 through the short circuit hole 23. In this case, as the deformable member 53 contacts the short circuit tab 51, the short circuit tab 51 and the cap plate 28 are electrically connected (see FIG. 5). Thereby, the negative electrode 12 and the positive electrode 11 are short-circuited.

When a short circuit occurs, as a large current instantaneously flows between the positive electrode 11 and the negative electrode 12, the electrode assembly 10 is discharged. Thereby, an electrical connection is intercepted between the first and second terminals 21 and 22 and the electrode assembly 10.

Further, as the protruded portion 533 contacts the short circuit tab 51, when a short circuit occurs, in spite of high heat that is generated between the center of the curved portion 531 and the short circuit tab 51, the protruded portion 533 is not melted and sustains a contact state. That is, as the protruded portion 533 contacts the short circuit tab 51, the protruded portion 533 may be partially melted by heat that is generated when a large current instantaneously flows, but the protruded portion 533 finally continues to sustain a contact state with the short circuit tab 51. Therefore, the negative electrode 12 and the positive electrode 11 continue to sustain a short circuit state. The electrode assembly 10 then no longer performs charge and discharge operations.

When a short circuit state between the negative electrode 12 and the positive electrode 11 is not sustained and internal temperature and pressure rise, the rechargeable battery 100 repeats charge and discharge and may thus explode or ignite, but the protruded portion 533 of the deformable member 53 can prevent explosion and ignition of the rechargeable battery 100.

Hereinafter, the second exemplary embodiment will be described, but a detailed description of constituent elements identical to or corresponding to those of the first exemplary embodiment will be omitted, and only dissimilar constituent elements will be described in detail.

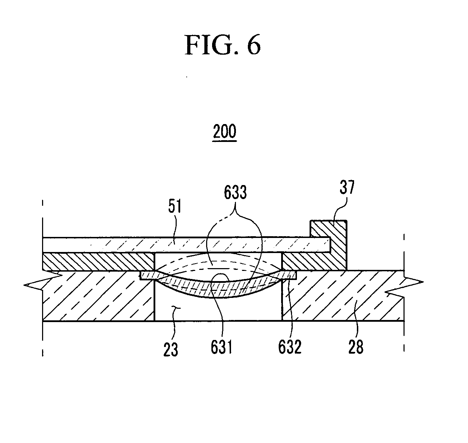

FIG. 6 is a cross-sectional view illustrating an operation state of a short circuit tab and a deformable member in a rechargeable battery according to a second exemplary embodiment of the present invention. Referring to FIG. 6, in a rechargeable battery 200 according to the second exemplary embodiment, a protruded portion 633 of a deformable member 63 is formed in a structure having a gradually increasing thickness toward the center of a curved portion 631 from a circumferential edge portion 632 (solid line state). Preferably, the thickness in the center is at least 1.2, preferably at least 1.5 times larger than the thickness of the curved portion at is cap plate contact location. The deformable member 63 according to the invention is a one-piece element improving its durability against melting.

When temperature and pressure of the inside of the rechargeable battery 200 rise, the shape of the curved portion 631 of the deformable member 63 is reversed to contact the short circuit tab 51, and the short circuit tab 51 and the cap plate 28 are electrically connected (imaginary line state). In this case, as the protruded portion 633 contacts the short circuit tab 51, when a short circuit occurs, in spite of high heat generated between the center of the curved portion 631 and the short circuit tab 51, the protruded portion 633 is not melted and sustains a contact state.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims. Throughout the embodiments, the deformable plate is a one-piece member integrally comprising thicker and thinner regions.

## Claims

1. A rechargeable battery (100, 200) comprising:
an electrode assembly (10) having a first electrode (12), a second electrode (11), and a separator (13) interposed between the first and the second electrodes (12, 11);
a case (15) for mounting the electrode assembly (10) therein; and
a cap assembly (20) comprising:
a cap plate (28) for closing an opening of the case (15),
a short circuit tab (51) electrically connected to the first electrode (12), and
a deformable member (53) being in communication with the inside of the battery (100, 200) and having a central portion, wherein the deformable member (53) is placed below the short circuit tab (51) and is adapted to be deformed upon an increase of an internal pressure inside the battery (100, 200) to contact the short circuit tab (51) and to connect the first electrode (12) with the second electrode (11),
**characterized in that**
the central portion of the deformable member (53) is provided with a greater thickness than the thickness of other parts of the deformable member (53).

2. Rechargeable battery (100, 200) according to claim 1, wherein the central portion of the deformable member (53) is adapted to contact the short circuit tab and/or is formed to have a thickness adapted to sustain contact to the short circuit tab (51) after deformation of the deformable member (53).

3. Rechargeable battery (100, 200) according to any of the previous claims, wherein the deformable member (53) comprises a circumferential edge portion (532, 632) and a deformable part (531, 631) formed on the inner side of the circumferential edge portion (532, 632) and protruding in convex form toward the interior of the battery (100, 200).

4. Rechargeable battery (100) according to any of the previous claims, wherein the portion of the deformable member (53) adapted to contact the short circuit tab (51) comprises a protrusion (533) formed to protrude to the inside of the case (15).

5. Rechargeable battery (100) according to claim 4, wherein the protrusion (533) of the deformable member (53) is formed at a central region of the deformable member (53) or deformable part (531) of the deformable member (53).

6. Rechargeable battery (200) according to any of the previous claims, wherein the deformable member (53) is formed in a structure having a gradually increasing thickness form its peripheral region toward its central region.

7. Rechargeable battery (200) of claim 6, wherein the surface of the deformable member (63) facing the interior of the case (15) is provided with a greater curvature than the surface of the deformable member (63) facing the short circuit tab (51).

8. Rechargeable battery (100, 200) according to any of the previous claims, wherein the deformable member (53) is formed within or covering or corresponding to a location of a short-circuit hole (23) provided in the cap plate (28) and wherein the short-circuit hole (23) is closed by the deformable member (53).

9. Rechargeable battery (100, 200) according to any of the previous claims, wherein the deformable member (53) is made out of a single piece and made out of conductive material.

10. Rechargeable battery (100, 200) according to any of the previous claims, wherein the deformable member (53) is electrically connected to the second electrode (11) via the cap plate (28).

11. Rechargeable battery (100, 200) according to claim any of the previous claims, wherein the short circuit tab (51) has a planar shape.

12. Rechargeable battery (100, 200) according to claim any of the previous claims, wherein the short circuit tab (51)
is disposed above the cap plate (28) and above the deformable member (53), and/or
is on one side end connected to the first electrode (12) via a first terminal (21) and on the other side end continues beyond the deformable member (53).

13. Rechargeable battery (100, 200) according to any of the previous claims, wherein the cap assembly (20) further comprises an insulation member (37) such that the short circuit tab (51) is coupled to the cap plate (28) with the insulation member (37) interposed therebetween to electrically isolate the short circuit tab (51) from the cap plate (28).

14. Rechargeable battery (100, 200) according to claim 13, wherein the insulation member (37) is formed in a structure enclosing a side of the short circuit tab (51).

## Patentansprüche

1. Wiederaufladbare Batterie (100, 200), umfassend:
eine Elektrodenanordnung (10) mit einer ersten Elektrode (12), einer zweiten Elektrode (11) und einem zwischen die erste und die zweite Elektrode (12, 11) angeordneten Separator (13);
ein Gehäuse (15) zum Einbringen der Elektrodenanordnung (10) darin; und
eine Abdeckungsanordnung (20) umfassend:
eine Abdeckplatte (28) zum Schließen einer Öffnung des Gehäuses (15),
einen mit der ersten Elektrode (12) elektrisch verbundenen Kurzschlussstreifen (51), und ein verformbares Element (53), das mit dem Inneren der Batterie (100, 200) in Verbindung steht und einen mittigen Abschnitt aufweist, wobei das verformbare Element (53) unter dem Kurzschlussstreifen (51) platziert ist und ausgebildet ist, sich bei Anstieg eines Innendrucks in der Batterie (100, 200) zu verformen, um den Kurzschlussstreifen (51) zu kontaktieren und die erste Elektrode (12) mit der zweiten Elektrode (11) zu verbinden,
**dadurch gekennzeichnet, dass**
der mittige Abschnitt des verformbaren Elements (53) mit einer Dicke versehen ist, die größer ist als die Dicke anderer Teile des verformbaren Elements (53).

2. Wiederaufladbare Batterie (100, 200) nach Anspruch 1, wobei der mittige Abschnitt des verformbaren Elements (53) ausgebildet ist, den Kurzschlussstreifen zu kontaktieren und/oder mit einer Dicke gebildet ist, die ausgebildet ist, den Kontakt mit dem Kurzschlussstreifen (51) nach der Verformung des verformbaren Elements (53) aufrechtzuerhalten.

3. Wiederaufladbare Batterie (100, 200) nach einem der vorangegangenen Ansprüche, wobei das verformbare Element (53) einen Umfangsrandabschnitt (532, 632) und ein an der Innenseite des Umfangsrandabschnitts (532, 632) ausgebildetes verformbares Teil (531, 631) umfasst und in konvexer Form zum Inneren der Batterie (100, 200) vorsteht.

4. Wiederaufladbare Batterie (100) nach einem der vorangegangenen Ansprüche, wobei der zur Kontaktierung des Kurzschlussstreifens (51) ausgebildete Abschnitt des verformbaren Elements (53) einen Vorsprung (533) umfasst, der ausgebildet ist, in das Innere des Gehäuses (15) zu ragen.

5. Wiederaufladbare Batterie (100) nach Anspruch 4, wobei der Vorsprung (533) des verformbaren Elements (53) an einem mittigen Bereich des verformbaren Elements (53) oder verformbaren Teils (531) des verformbaren Elements (53) ausgebildet ist.

6. Wiederaufladbare Batterie (200) nach einem der vorangegangenen Ansprüche, wobei das verformbare Element (53) eine Struktur aufweist, deren Dicke allmählich von ihrem Umfangsbereich zum mittigen Bereich zunimmt.

7. Wiederaufladbare Batterie (200) nach Anspruch 6, wobei die dem Inneren des Gehäuses (15) zugewandte Fläche des verformbaren Elements (63) mit einer größeren Krümmung versehen ist, als die dem Kurzschlussstreifen (51) zugewandte Fläche des verformbaren Elements (63).

8. Wiederaufladbare Batterie (100, 200) nach einem der vorangegangenen Ansprüche, wobei das verformbare Element (53) innerhalb einer Lage einer in der Abdeckplatte (28) vorgesehenen Kurzschlussaussparung (23) oder diese abdeckend oder dieser entsprechend ausgebildet ist, und wobei die Kurzschlussaussparung (23) von dem verformbaren Element (53) verschlossen wird.

9. Wiederaufladbare Batterie (100, 200) nach einem der vorangegangenen Ansprüche, wobei das verformbare Element (53) aus einem Stück besteht und aus leitfähigem Material hergestellt ist.

10. Wiederaufladbare Batterie (100, 200) nach einem der vorangegangenen Ansprüche, wobei das verformbare Element (53) elektrisch mit der zweiten Elektrode (11) über die Abdeckplatte (28) verbunden ist.

11. Wiederaufladbare Batterie (100, 200) nach einem der vorangegangenen Ansprüche, wobei der Kurzschlussstreifen (51) eine flache Form aufweist.

12. Wiederaufladbare Batterie (100, 200) nach einem der vorangegangenen Ansprüche, wobei der Kurzschlussstreifen (51)
über der Abdeckplatte (28) und über dem verformbaren Element (53) angeordnet ist, und/oder
an einem Seitenende mit der ersten Elektrode (12) über einen ersten Anschluss (21) verbunden ist und an dem anderen Seitenende über das verformbare Element (53) hinausragt.

13. Wiederaufladbare Batterie (100, 200) nach einem der vorangegangenen Ansprüche, wobei die Abdeckungsanordnung (20) ferner ein Isolierelement (37) derart umfasst, dass der Kurzschlussstreifen (51) mit der Abdeckplatte (28) verbunden ist, wobei das Isolierelement (37) dazwischen angeordnet ist, um den Kurzschlussstreifen (51) elektrisch von der Abdeckplatte (28) zu isolieren.

14. Wiederaufladbare Batterie (100, 200) nach Anspruch 13, wobei das Isolierelement (37) eine Struktur aufweist, die eine Seite des Kurzschlussstreifens (51) umschließt.

## Revendications

1. Batterie rechargeable (100, 200), comprenant :
un ensemble d'électrodes (10) comportant une première électrode (12), une deuxième électrode (11) et un séparateur (13) interposé entre la première et la deuxième électrode (12, 11) ;
un boîtier (15) pour monter l'ensemble d'électrodes (10) à l'intérieur de celui-ci ; et
un ensemble de capuchon (20), comprenant :
une plaque de capuchon (28) pour fermer une ouverture du boîtier (15),
une patte de court-circuit (51) électriquement connectée à la première électrode (12), et
un élément déformable (53) qui est en communication avec l'intérieur de la batterie (100, 200), et comportant une partie centrale, l'élément déformable (53) étant disposé en dessous de la patte de court-circuit (51) et étant adapté de façon à être déformé lors d'une augmentation d'une pression interne à l'intérieur de la batterie (100, 200) de façon à venir en contact avec la patte de court-circuit (51) et à connecter la première électrode (12) à la deuxième électrode (11),
**caractérisée en ce que** :
la partie centrale de l'élément déformable (53) a une épaisseur supérieure à l'épaisseur d'autres parties de l'élément déformable (53).

2. Batterie rechargeable (100, 200) selon la revendication 1, dans laquelle la partie centrale de l'élément déformable (53) est adaptée de façon à venir en contact avec la patte de court-circuit et/ou est formée de façon à avoir une épaisseur adaptée pour supporter un contact avec la patte de court-circuit (51) après la déformation de l'élément déformable (53).

3. Batterie rechargeable (100, 200) selon l'une quelconque des revendications précédentes, dans laquelle l'élément déformable (53) comprend une partie de bord circonférentielle (532, 632) et une partie déformable (531, 631) formée sur le côté intérieur de la partie de bord circonférentielle (532, 632) et faisant saillie sous une forme convexe vers l'intérieur de la batterie (100, 200).

4. Batterie rechargeable (100) selon l'une quelconque des revendications précédents, dans laquelle la partie de l'élément déformable (53) adaptée de façon à venir en contact avec la patte de court-circuit (51) comprend une saillie (533) formée de façon à faire saillie vers l'intérieur du boîtier (15).

5. Batterie rechargeable (100) selon la revendication 4, dans laquelle la saillie (533) de l'élément déformable (53) est formée dans une région centrale de l'élément déformable (53) ou de la partie déformable (531) de l'élément déformable (53).

6. Batterie rechargeable (200) selon l'une quelconque des revendications précédentes, dans laquelle l'élément déformable (53) est formé en une structure ayant une épaisseur croissant graduellement à partir de sa région périphérique vers sa région centrale.

7. Batterie rechargeable (200) selon la revendication 6, dans laquelle la surface de l'élément déformable (63) faisant face à l'intérieur du boîtier (15) possède une courbure supérieure à celle de la surface de l'élément déformable (63) faisant face à la patte de court-circuit (51).

8. Batterie rechargeable (100, 200) selon l'une quelconque des revendications précédentes, dans laquelle l'élément déformable (53) est formé à l'intérieur d'un emplacement d'un trou de court-circuit (23) réalisé dans la plaque de capuchon (28), ou de façon à recouvrir celui-ci, ou de façon à correspondre à celui-ci, et dans laquelle le trou de court-circuit (23) est fermé par l'élément déformable (53).

9. Batterie rechargeable (100, 200) selon l'une quelconque des revendications précédentes, dans laquelle l'élément déformable (53) est réalisé d'un seul tenant, et est constitué par un matériau conducteur.

10. Batterie rechargeable (100, 200) selon l'une quelconque des revendications précédentes, dans laquelle l'élément déformable (53) est électriquement connecté à la deuxième électrode (11) par l'intermédiaire de la plaque de capuchon (28).

11. Batterie rechargeable (100, 200) selon l'une quelconque des revendications précédentes, dans laquelle la patte de court-circuit (51) a une forme plane.

12. Batterie rechargeable (100, 200) selon l'une quelconque des revendications précédentes, dans laquelle la patte de court-circuit (51) :
est disposée au-dessus de la plaque de capuchon (28) et au-dessus de l'élément déformable (53), et/ou
sur une extrémité d'un côté, est connectée à la première électrode (12) par l'intermédiaire d'une première borne (21), et, sur l'extrémité de l'autre côté, se poursuit au-delà de l'élément déformable (53).

13. Batterie rechargeable (100, 200) selon l'une quelconque des revendications précédentes, dans laquelle l'ensemble de capuchon (20) comprend de plus un élément d'isolement (37), de telle sorte que la patte de court-circuit (51) soit couplée à la plaque de capuchon (28) avec l'élément d'isolement (37) interposé entre ceux-ci de façon à isoler électriquement la patte de court-circuit (51) de la plaque de capuchon (28).

14. Batterie rechargeable (100, 200) selon la revendication 13, dans laquelle l'élément d'isolement (37) est formé en une structure renfermant un côté de la patte de court-circuit (51).
